# EUROPÄISCHE PATENTSCHRIFT

(11) **EP 3 458 214 B1**
(45) Veröffentlichungstag und Bekanntmachung des Hinweises auf die Patenterteilung: **22.11.2023**
(21) Anmeldenummer: 17724349.0
(22) Anmeldetag: 18.05.2017
(51) Int. Cl.: B23B 27/04, B23B 29/04

(54) **HALTER FÜR EIN WERKZEUG ZUR SPANENDEN BEARBEITUNG, INSBESONDERE FÜR EIN LANGDREHWERKZEUG**
HOLDER FOR A TOOL FOR METAL CUTTING MACHINING, IN PARTICULAR FOR A TURNING TOOL
SUPPORT POUR UN OUTIL POUR USINAGE, EN PARTICULIER POUR UN OUTIL DE TOURNAGE

(30) Priorität: 20.05.2016 DE 102016109327
(43) Veröffentlichungstag der Anmeldung: 27.03.2019
(73) Patentinhaber: Hartmetall-Werkzeugfabrik Paul Horn GmbH, 72072 Tübingen (DE)
(72) Erfinder: NOUREDDINE, Hassan, 72147 Nehren (DE)
(74) Vertreter: Witte, Weller & Partner Patentanwälte mbB
(86) Internationale Anmeldenummer: PCT/EP2017/061942
(87) Internationale Veröffentlichungsnummer: WO 2017/198759

(56) Entgegenhaltungen:
- EP-A1- 0 259 846
- EP-A1- 0 937 526
- DE-A1- 3 301 919
- DE-A1-102012 019 450
- GB-A- 2 082 485
- US-A- 5 267 817
- US-A- 5 516 241

## Beschreibung

Die vorliegende Erfindung betrifft einen Halter für ein Werkzeug zur spanenden Bearbeitung eines Werkstücks. Die vorliegende Erfindung betrifft ferner ein Werkzeug mit einem solchen Halter und einem daran austauschbar festlegbaren Schneideinsatz. Das erfindungsgemäße Werkzeug betrifft insbesondere ein Drehwerkzeug, vorzugsweise ein sogenanntes Langdrehwerkzeug.

Der erfindungsgemäße Halter weist im Bereich seines vorderen Endes eine Schneideinsatzaufnahme zur Aufnahme eines Schneideinsatzes und im Bereich seines gegenüberliegenden hinteren Endes einen Schaft auf, welcher sich im Wesentlichen entlang einer Längsachse erstreckt und einen Einspannabschnitt zum Einspannen des Halters in eine Werkzeugmaschine bildet. Die Schneideinsatzaufnahme wird durch eine obere und eine untere Klemmbacke definiert. Der Halter weist ferner ein Oberteil auf, an dem die obere Klemmbacke angeordnet ist. Des Weiteren weist der Halter ein Unterteil auf, an dem die untere Klemmbacke angeordnet ist. Der Schaft ist integral mit dem Unterteil verbunden. Das Ober- und das Unterteil sind ausschließlich über einen Steg miteinander verbunden, welcher sich zwischen einem ersten und einem zweiten Trennschlitz erstreckt. Die beiden Trennschlitze erstrecken zwischen dem Oberteil und dem Unterteil des Halters und sind auf gegenüberliegenden Seiten des Steges angeordnet, so dass das Oberteil über den Steg in der Art einer Wippe relativ zu dem Unterteil schwenkbeweglich ist. Der erste Trennschlitz erstreckt sich in einem vorderen Halterbereich zwischen der Schneideinsatzaufnahme und dem Steg. Der zweite Trennschlitz erstreckt sich in einem mittleren Halterbereich zwischen dem Steg und dem Einspannabschnitt. Der Halter weist ferner ein Betätigungsmittel auf, welches im mittleren Halterbereich an dem Oberteil angreift und dazu ausgebildet ist, den zweiten Trennschlitz aufzuspreizen, um die obere Klemmbacke auf die untere Klemmbacke zuzubewegen und den Schneideinsatz zwischen der oberen und der unteren Klemmbacke festzuklemmen.

Ein gattungsgemäßer Werkzeughalter, welcher die Grundlage für den Oberbegriff des Anspruchs 1 bildet, ist bereits aus der EP 0 259 846 A1 bekannt. Weitere beispielhafte Werkzeughalter sind aus EP 2 282 859 B1, EP 0 937 526 A1, GB 2 082 485 A, US 5,516,241 A, US 5,267,817 A und DE 33 01 919 A1 bekannt.

Drehwerkzeuge der oben genannten Art bestehen meist aus einem im Wesentlichen balkenförmigen Halter aus Stahl und einem daran austauschbar befestigten Schneideinsatz aus Hartmetall. In den meisten Fällen ist der Schneideinsatz mit Hilfe einer Schraube oder eines anderen Befestigungsmittels am Halter befestigt. Der Schneideinsatz, welcher als Verschleißteil relativ häufig gewechselt werden muss, lässt sich daher relativ einfach vom Halter lösen und durch einen neuen austauschen.

Bei der Drehbearbeitung von rotationssymmetrischen Bauteilen muss oft sehr nahe an der Spindel gearbeitet werden. Dies ist speziell bei sogenannten Langdrehmaschinen der Fall, da hier die Vorschubbewegung von der Spindel ausgeht. Aus diesem Grund sind die Werkzeuge (sogenannte Langdrehwerkzeuge) in diesen Maschinen meist direkt an der Spindel angeordnet. Meist werden gleichzeitig mehrere solcher Werkzeuge unterschiedlicher Art an der Spindel angeordnet, um je nach gewünschter Drehbearbeitung variable von einem Werkzeug zum nächsten wechseln zu können. Aus Platzgründen sind die Werkzeuge in Langdrehmaschinen oft in sogenannten Lineareinheiten eingespannt, in denen mehrere Werkzeuge bzw. Werkzeughalter direkt übereinander angeordnet sind. Sind diese Werkzeughalter mit austauschbaren Schneideinsätzen bestückt, gestaltet sich der Schneidplattenwechsel häufig als schwierig, da die zu lösenden Befestigungsmittel (meist Schrauben) in den allermeisten Fällen nur sehr eingeschränkt zugänglich sind. Häufig muss der Werkzeughalter daher komplett aus der Lineareinheit ausgebaut werden, um den Schneideinsatz wechseln zu können. Dies ist umständlich und führt zu hohen Rüstzeiten.

Zur Lösung des oben genannten. Problems wurde bereits eine Vielfalt von unterschiedlichsten Lösungen vorgeschlagen. Aus der EP 2 282 859 B1 sind diverse Lösungen bekannt, bei der die als Befestigungsmittel dienende Schraube von unterschiedlichsten Seiten aus im Halter des Werkzeugs einsetzbar ist, so dass je nach Einbausituation eine entsprechende Lösung mit günstiger Schraubenposition gewählt werden kann.

Aus der EP 2 379 260 B1 ist ferner ein Werkzeug bekannt, bei der die zur Befestigung des Schneideinsatzes verwendete Spannschraube von zwei unterschiedlichen Seiten aus in den Halter eingesetzt werden kann, so dass je nach Einbausituation die Spannschraube entweder von der einen oder von der anderen Seite im Halter befestigt wird.

Der vorliegenden Erfindung liegt die Aufgabe zugrunde, einen Halter für ein Werkzeug der oben genannten Art bereitzustellen, bei dem es möglich ist, den Schneideinsatz auch in engen Einbausituationen möglichst einfach am Halter befestigen zu können. Insbesondere die konstruktive Ausgestaltung zum Anziehen und Lösen des Schneideinsatzes soll im Vergleich zu den vorgenannten, bereits bekannten Lösungen auf alternative Art und Weise ausgestaltet sein.

Diese Aufgabe wird erfindungsgemäß, ausgehend von dem Halter der eingangs genannten Art, dadurch gelöst, dass das Betätigungsmittel eine Schraube ist, die in ein im Unterteil vorgesehenes Gewinde eingreift, welches sich entlang einer Gewindeachse erstreckt, die im Wesentlichen senkrecht zu der Längsachse des Halters ausgerichtet ist, wobei die Schraube einen konischen Schraubenkopf aufweist, welcher zum Aufspreizen des zweiten Trennschlitzes an dem Oberteil angreift.

Der erfindungsgemäße Halter ist also derart ausgestaltet, dass zwischen dem Oberteil, an dem die obere Klemmbacke angeordnet ist, und dem Unterteil, an dem die untere Klemmbacke angeordnet ist, lediglich eine einzige mechanische Verbindung, nämlich über den genannten Steg, existiert. Hierdurch entsteht eine Art Wippe, wobei der Verbindungssteg zwischen Ober- und Unterteil sozusagen als Gelenk dieser Wippe agiert. Es versteht sich jedoch, dass es sich hierbei nicht um ein tatsächliches Gelenk oder Lager handelt, sondern um eine stabile mechanische Verbindung zwischen Ober- und Unterteil, welche aufgrund der geringen Breite eine zumindest teilweise elastische Schwenkbeweglichkeit des Oberteils ermöglicht. Zur Gewährleistung dieser Schwenkbeweglichkeit schließen sich auf beiden Seiten des Stegs Trennschlitze an, welche das Oberteil von dem Unterteil trennen. Durch diese Trennschlitze entsteht beidseits des Stegs also eine Art Zwischenraum zwischen dem Ober- und dem Unterteil, welcher nicht aufgefüllt ist, indem sich also Luft befindet.

Das Betätigungselement, bei dem es sich um eine Schraube handelt, greift am Oberteil an, um dieses in seinem hinteren Bereich, welcher über dem zweiten Trennschlitz angeordnet ist, nach oben zu drücken. Durch den erfindungsgemäßen Wippmechanismus des Oberteils bewirkt die Bewegung des hinteren Teils des Oberteils nach oben, wodurch der zweite Trennschlitz aufgespreizt wird, eine Bewegung der oberen Klemmbacke auf die untere Klemmbacke zu. Die Schneideinsatzaufnahme wird somit also in ihrer Höhe verringert, so dass der Schneideinsatz in dieser festgeklemmt wird.

Ein Lösen des Betätigungselements bewirkt die umgekehrte Bewegung, nämlich ein Zurückschwenken des Oberteils, bei dem sich die obere Klemmbacke von der unteren Klemmbacke wegbewegt und die Schneideinsatzaufnahme aufgespreizt wird. Der Schneideinsatz lässt sich dann vorzugsweise von Hand lösen.

Erfindungsgemäß weist der Halter einen Schaft auf, welcher sich im Wesentlichen entlang einer Längsachse erstreckt, den Einspannabschnitt bildet und integral mit dem Unterteil verbunden ist, wobei das Betätigungsmittel eine Schraube ist, welches in ein im Unterteil vorgesehenes Gewinde eingreift, welches sich entlang einer Gewindeachse erstreckt, die im Wesentlichen senkrecht zu der Längsachse des Halters ausgerichtet ist. Die Gewindeachse verläuft dabei vorzugsweise parallel zu dem ersten und/oder zweiten Trennschlitz, wobei sich die Trennschlitze vorzugsweise über die gesamte Breite des Halters erstrecken und somit eine Art Ebene zwischen dem Ober- und Unterteil bilden. Anders ausgedrückt, verläuft die Gewindeachse vorzugsweise parallel zu dem Steg, welcher sich von einer ersten Längsseite des Halters bis zu einer gegenüberliegenden zweiten Längsseite des Halters erstreckt.

Die als Betätigungsmittel verwendete Schraube wird also seitlich in den Halter eingeschraubt. Dies bietet den Vorteil, dass sie im Gegensatz zu Schrauben, welche frontal oder schräg von vorne an dem stirnseitigen Ende des Halters eingeschraubt werden, insbesondere in Langdrehautomaten sehr einfach zugänglich ist.

Erfindungsgemäß weist die Schraube einen konischen Schraubenkopf auf, welcher zum Aufspreizen des zweiten Trennschlitzes an dem Oberteil angreift. Genauer gesagt greift die konisch geformte Umfangsfläche des Schraubenkopfs an dem Oberteil des Halters an, um den zweiten Trennschlitz aufzuspreizen.

Aufgrund des konischen Schraubenkopfs wird das Oberteil des Halters beim Einschrauben der Schraube im hinteren Teil, der sich oberhalb des zweiten Trennschlitzes befindet, automatisch nach oben bewegt, wodurch der zweite Trennschlitz aufgespreizt wird. Die Aufspreizung des zweiten Trennschlitzes bewirkt, wie oben bereits erwähnt, aufgrund des Wippmechanismus auf der anderen Seite des Steges ein Verkleinerung bzw. Stauchen des ersten Trennschlitzes und der an diesen anschließenden Schneideinsatzaufnahme. Je weiter die Schraube in den Halter eingeschraubt wird, desto mehr wird die obere Klemmbacke auf die untere Klemmbacke zubewegt und der Schneideinsatz zwischen den beiden Klemmbacken festgeklemmt.

Gemäß einer weiteren Ausgestaltung weist der Halter auf einer ersten Längsseite eine erste Ausnehmung zur Aufnahme des Schraubenkopfs auf, wobei das Gewinde und der zweite Trennschlitz in die erste Ausnehmung münden, und wobei die erste Ausnehmung zumindest teilweise von einer Anlagefläche begrenzt wird, welche an dem Oberteil angeordnet ist und an der der Schraubenkopf angreift. Diese Anlagefläche am Oberteil des Halters ist, ähnlich wie der Schraubenkopf, vorzugsweise ebenfalls konisch geformt.

In der zuletzt genannten Ausgestaltung ist es insbesondere bevorzugt, dass die am Oberteil des Halters vorgesehene, konisch geformte Anlagefläche mit der Gewindeachse einen ersten Winkel einschließt, welcher kleiner oder gleich groß ist wie ein zweiter Winkel, den die konische Umfangsfläche des Schraubenkopfs mit der Längsachse der Schraube einschließt. Besonders bevorzugt sind beide genannten Winkel gleich groß.

Des Weiteren ist es in der zuletzt genannten Ausgestaltung bevorzugt, dass die erste Ausnehmung zumindest teilweise von einer unteren Begrenzungsfläche begrenzt wird, welche an dem Unterteil angeordnet ist, wobei ein erster Abstand zwischen der Gewindeachse und der am Oberteil angeordneten, konisch geformten Anlagefläche kleiner ist als ein zweiter Abstand zwischen der Gewindeachse und der unteren Begrenzungsfläche, und wobei ein halber Durchmesser des Schraubenkopfs kleiner ist als der zweite Abstand, aber gleich groß oder größer ist als der erste Abstand.

Die oben genannte Dimensionierung hat den Vorteil, dass die untere Begrenzungsfläche der ersten Ausnehmung beim Einschrauben der Schraube freiläuft, so dass der Schraubenkopf der Schraube lediglich an der am Oberteil des Halters angeordneten, konischen Anlagefläche angreift, jedoch die untere Begrenzungsfläche der Ausnehmung nicht berührt.

Gemäß einer bevorzugten Ausgestaltung grenzen die obere Klemmbacke und die untere Klemmbacke an eine zweite Längsseite des Halters an, welche der ersten Längsseite, an der die erste Ausnehmung angeordnet ist, gegenüberliegt.

Die Schraube wird also vorzugsweise von der Seite aus in den Halter eingeschraubt, welche der Schneideinsatzaufnahme, also der oberen und unteren Klemmbacke, gegenüberliegt. Diese Art der Anordnung verbessert die mechanische Stabilität des Plattensitzes bzw. die Klemmung des Schneideinsatzes in Halter.

Gemäß einer weiteren Ausgestaltung der vorliegenden Erfindung weist der Halter auf der zweiten Längsseite eine zweite Ausnehmung zur Aufnahme des Schraubenkopfs auf, wobei das Gewinde und der zweite Trennschlitz in die zweite Ausnehmung münden, so dass die Schraube wahlweise sowohl von der ersten Längsseite bzw. der ersten Ausnehmung aus als auch von der zweiten Längsseite bzw. der zweiten Ausnehmung aus in das Gewinde einsetzbar ist.

Die auf gegenüberliegenden Seiten des Halters angeordneten, äquivalenten zwei Ausnehmungen ermöglichen es, die Schraube je nach Bedarf und Einbausituation des Werkzeugs in der Werkzeugmaschine sowohl von der einen als auch von der gegenüberliegenden, anderen Seite im Halter einzuschrauben, um den Schneideinsatz am Halter zu befestigen.

Gemäß einer weiteren Ausgestaltung weist der zweite Trennschlitz zwei Teilabschnitte auf. Ein erster Abschnitt des zweiten Trennschlitzes grenzt an den Steg an. Ein zweiter Abschnitt des zweiten Trennschlitzes grenzt an ein freies Ende des zweiten Trennschlitzes an. Der erste und der zweite Abschnitt sind vorzugsweise unter einem spitzen Winkel relativ zueinander geneigt.

Aufgrund dieses spitzen Winkels steht ein Teil des Halterschafts über den hinteren Teil des Oberteils über. Zwischen diesem Überhang des Halterschafts und dem hinteren Teil des Halter-Oberteils erstreckt sich der zweite Abschnitt des zweiten Trennschlitzes. Dies hat den Vorteil, dass ein Überdrehen bzw. Überkippen des Wippmechanismus verhindert wird, da das Oberteil bei einem zu starken Aufspreizen des ersten Abschnitts des zweiten Trennschlitzes an dem Überhang des Halterschafts anschlägt und ein weiteres Verkippen des Halter-Oberteils verhindert wird.

Der erste Trennschlitz mündet vorzugsweise in die Schneideinsatzaufnahme zwischen der oberen und der unteren Klemmbacke. Im Gegensatz zur oberen und unteren Klemmbacke, welche an die zweite Längsseite des Halters angrenzen und nur auf dieser Seite des Halters angeordnet sind, erstreckt sich der erste Trennschlitz (wie auch der zweite Trennschlitz) über die gesamte Breite des Halters.

Gemäß einer weiteren Ausgestaltung der vorliegenden Erfindung weist der Halter einen internen Kühlmittelkanal auf, wobei ein Kühlmittelausgang des Kühlmittelkanals an der oberen Klemmbacke angeordnet ist, und wobei ein Teilstück des Kühlmittelkanals im Inneren des Steges von dem Unterteil in das Oberteil des Halters führt.

Auf diese Weise kann Kühlmittel direkt an den Schneideinsatz bzw. dessen Schneide geführt werden trotz der Tatsache, dass das Halter-Oberteil und das Halter-Unterteil lediglich über den Steg miteinander verbunden sind. Da sich der Steg vorzugsweise über die gesamte Breite des Halters erstreckt, erfährt der Steg durch die Integration des Teilstücks des Kühlmittelkanals keine allzu starke mechanische Schwächung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines Ausführungsbeispiels des erfindungsgemäßen Werkzeugs;
- Fig. 2: eine perspektivische Ansicht des in Fig. 1 gezeigten Ausführungsbeispiels des erfindungsgemäßen Werkzeugs von der gegenüberliegenden Seite aus betrachtet;
- Fig. 3: eine Seitenansicht eines Details des erfindungsgemäßen Werkzeugs;
- Fig. 4: eine Seitenansicht des in Fig. 3 gezeigten Details, wobei im Vergleich zur Fig. 3 ein Betätigungselement weggelassen ist;
- Fig. 5: eine Seitenansicht des in den Fig. 3 und 4 gezeigten Details von der gegenüberliegenden Seite aus betrachtet;
- Fig. 6: ein Längsschnitt des in Fig. 1 gezeigten Ausführungsbeispiels des erfindungsgemäßen Werkzeugs;
- Fig. 7: ein weiterer Längsschnitt eines Details des erfindungsgemäßen Werkzeugs;
- Fig. 8: ein Querschnitt durch den Halter des erfindungsgemäßen Werkzeugs;
- Fig. 9: ein Längsschnitt eines in dem erfindungsgemäßen Werkzeug verwendeten Betätigungselements gemäß eines Ausführungsbeispiels; und
- Fig. 10: eine weitere Querschnittansicht des Halters des erfindungsgemäßen Werkzeugs, welche in Fig. 5 angedeutet ist.

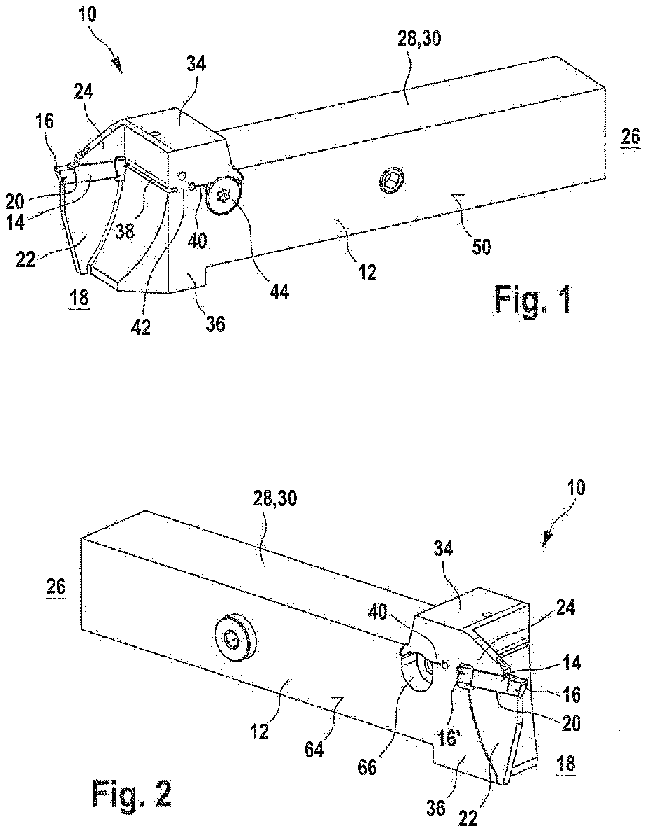

Die Fig. 1 und 2 zeigen ein Ausführungsbeispiel des erfindungsgemäßen Werkzeugs in perspektivischen Ansichten von unterschiedlichen Seiten. Das Werkzeug ist darin in seiner Gesamtheit mit der Bezugsziffer 10 bezeichnet.

Das Werkzeug 10 weist einen Halter 12, welcher häufig auch als Werkzeughalter 12 bezeichnet wird, sowie einen Schneideinsatz 14 auf. Der Schneideinsatz 14 ist an dem Halter 12 lösbar befestigt, also kein fester Bestandteil des Halters 12. Der Halter 12 ist vorzugsweise aus Stahl. Der Schneideinsatz 14 hingegen ist vorzugsweise aus Hartmetall gefertigt. Bei dem Schneideinsatz 14 handelt es sich vorzugsweise um eine sogenannte Wendeschneidplatte, welche gemäß dem in den Fig. 1 und 2 gezeigten Ausführungsbeispiel zwei gleiche Schneidköpfe 16 bzw. 16' aufweist, wobei jeder der beiden Schneidköpfe eine oder mehrere Schneidkanten aufweist, mit Hilfe derer das Werkstück beim Einsatz des Werkzeugs 10 spanend bearbeitet wird. Es versteht sich jedoch, dass in dem erfindungsgemäßen Werkzeug 10 auch Schneideinsätze mit nur einem Schneidkopf 16 oder mit mehr als zwei Schneidköpfen 16 bzw. 16' zum Einsatz kommen können.

Der Werkzeughalter 12 weist im Bereich seines vorderen Endes 18 eine Schneideinsatzaufnahme 20 auf, welche als Aufnahme für den Schneideinsatz 14 dient. Die Schneideinsatzaufnahme 20 wird durch eine untere Klemmbacke 22 und eine obere Klemmbacke 24 gebildet. Der Schneideinsatz 14 wird zwischen der unteren Klemmbacke 22 und der oberen Klemmbacke 24 festgeklemmt. Bei der oberen Klemmbacke 24 handelt es sich um eine schwenkbewegliche Klemmbacke, wohingegen es sich bei der unteren Klemmbacke 22 um eine starre Klemmbacke handelt.

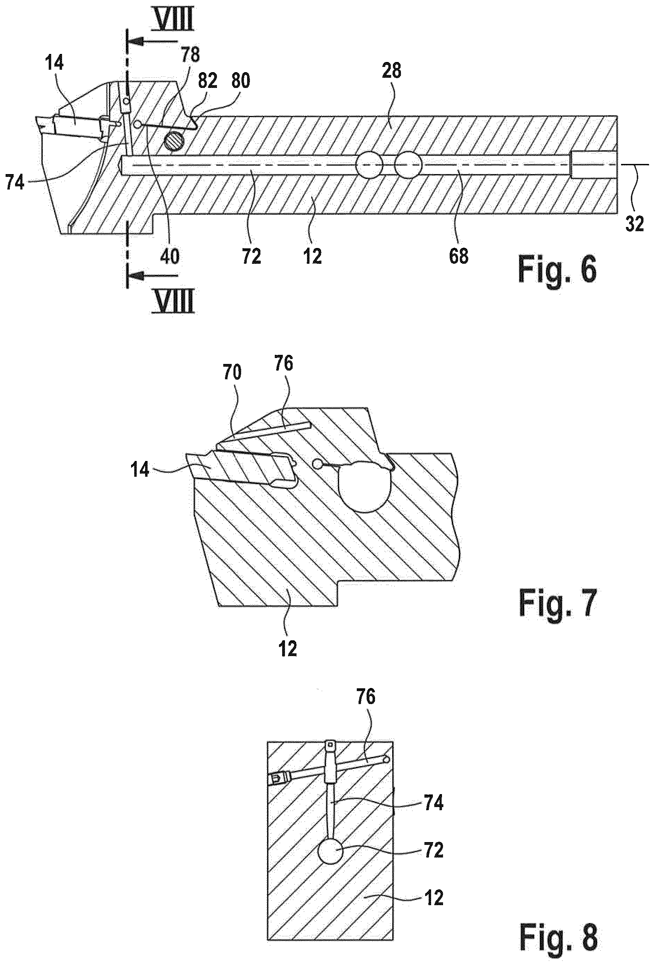

Im Bereich seines hinteren Endes 26 weist der Halter 12 einen im Wesentlichen balkenförmigen Schaft 28 auf. Dieser Schaft 28 bildet den Einspannabschnitt 30, mit Hilfe dessen der Halter 12 in einer Werkzeugmaschine eingespannt werden kann. Der Schaft 28 erstreckt sich im Wesentlichen entlang einer Längsachse 32 (siehe beispielsweise Fig. 6) und hat vorzugsweise einen rechteckigen Querschnitt.

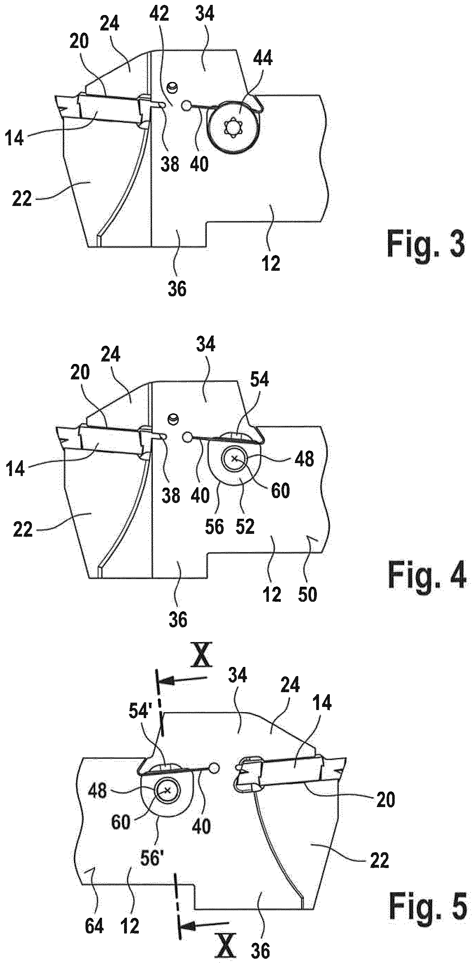

Charakteristisch für das erfindungsgemäße Werkzeug 10 ist die Art der Befestigung des Schneideinsatzes 14 im Halter 12. Der Halter 12 ist hierzu in ein Oberteil 34 und ein Unterteil 36 aufgeteilt. Die obere Klemmbacke 24 ist an dem Oberteil 34 angeordnet. Das Oberteil 34 und das Unterteil 36 werden durch zwei Trennschlitze 38, 40 voneinander getrennt (siehe insbesondere Fig. 3-5). Die beiden Trennschlitze 38, 40 erstrecken sich also räumlich gesehen zwischen dem Oberteil 34 und dem Unterteil 36 des Halters 12. Der erste Trennschlitz 38 mündet vorzugsweise in die Schneideinsatzaufnahme 20, der zweite Trennschlitz 40 ist in einem mittleren Bereich des Halters 12 angeordnet, welcher im Vergleich zum ersten Trennschlitz 38 näher an dem Einspannabschnitt 30 bzw. näher an dem hinteren Ende 26 des Halters 12 angeordnet ist. Der zweite Trennschlitz 40 erstreckt sich vorzugsweise über die gesamte Breite des Halters 12.

Zwischen den beiden Trennschlitzen 38, 40 ist ein Steg 42 angeordnet. Dieser Steg 42 erstreckt sich ebenfalls vorzugsweise über die gesamte Breite des Halters 12. Der Steg 42 dient als Verbindungssteg zwischen dem Oberteil 34 und dem Unterteil 36 des Halters 12. Das Oberteil 34 und das Unterteil 36 sind, genauer gesagt, ausschließlich über diesen Steg 42 miteinander verbunden. Eine andere direkte Verbindung zwischen dem Oberteil 34 und dem Unterteil 36 existiert nicht. Auf diese Weise entsteht eine Art Wippmechanismus des Oberteils 34, da das Oberteil 34 in der Art einer Wippe relativ zu dem Unterteil 36 schwenkbeweglich ist. Der Steg 42 dient dabei als eine Art Gelenk bzw. Scharnier. Es versteht sich jedoch, dass die Schwenkbeweglichkeit des Oberteils 34 aufgrund der Tatsache, dass der Halter 12 aus Stahl gefertigt ist, vergleichsweise gering ist.

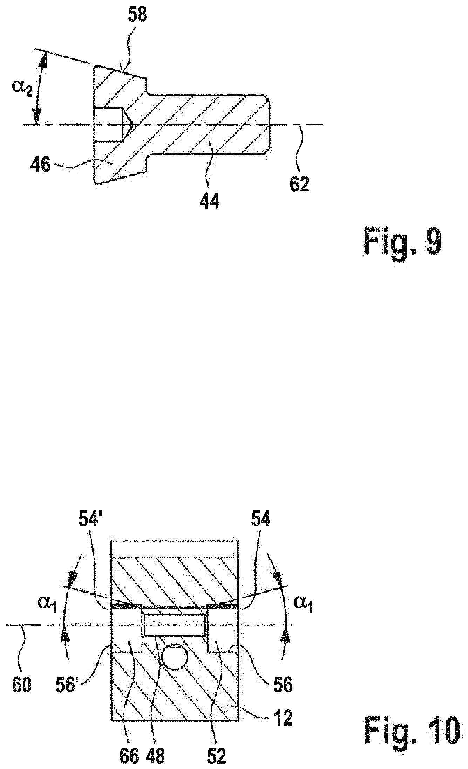

Um den o.g. Wippmechanismus des Oberteils 34 zu betätigen, weist der Halter 12 ferner ein Betätigungselement 44 auf. Bei diesem Betätigungselement 44 handelt es sich vorzugsweise um eine Schraube mit einem konisch geformten Schraubenkopf 46 (siehe Fig. 9). Die Schraube 44 greift in ein Gewinde 48 ein, welches in Querrichtung des Halters orthogonal zur Längsachse 32 verläuft. Das Gewinde 48 ist vorzugsweise parallel zu dem ersten und/oder zweiten Trennschlitz 38, 40 ausgerichtet. Das Gewinde 48 ist im starren Unterteil 36 des Halters 12 angeordnet. Die Schraube 44 greift in eingeschraubtem Zustand mit dem Schraubenkopf 46 jedoch am Oberteil 34 des Halters 12 an. Aufgrund der konischen Form des Schraubenkopfs 46 wird das hintere bzw. halterseitige Ende des Oberteils 34 mit zunehmender Einschraubtiefe der Schraube 44 nach oben gedrückt, wodurch der zweite Trennschlitz 40 nach und nach weiter aufgespreizt wird. Aufgrund der bereits oben beschriebenen Verbindung zwischen dem Oberteil 34 und dem Unterteil 36 über den Steg 42 wird das vordere bzw. werkstückseitige Ende des Oberteils 34 dabei nach unten bzw. auf das Unterteil 36 zu geschwenkt. Die obere Klemmbacke 24 wird also mit zunehmender Einschraubtiefe der Schraube 44 nach und nach weiter auf die untere Klemmbacke 22 zu geschwenkt, so dass die Schneideinsatzaufnahme 20 in ihrer Höhe verringert wird und der Schneideinsatz 14 zwischen der oberen und der unteren Klemmbacke 24, 22 festgeklemmt wird.

Relativ zu der Schneideinsatzaufnahme 20 betrachtet wird die Schraube 44 vorzugsweise von der gegenüberliegenden Halterseite aus in den Halter 12 eingeschraubt (siehe Fig. 1 und 2). Hierzu ist auf einer ersten Längsseite 50 des Halters 12 eine erste Ausnehmung 52 vorgesehen, welche der Aufnahme des Schraubenkopfs 46 der Schraube 44 dient (siehe Fig. 4). Die erste Ausnehmung 52 ist vorzugsweise als eine im Wesentlichen topfförmige Ausnehmung ausgestaltet. Sowohl das Gewinde 48 als auch der zweite Trennschlitz 40 münden in diese erste Ausnehmung 52. Die erste Ausnehmung 52 wird in radialer Richtung nach oben hin zum einen durch eine Anlagefläche 54 und nach unten hin durch eine Begrenzungsfläche 56 begrenzt, welche vorliegende als untere Begrenzungsfläche 56 bezeichnet wird (siehe Fig. 4). Die Anlagefläche 54 ist am Oberteil 34 des Halters 12 angeordnet. Die untere Begrenzungsfläche 56 ist hingegen am Unterteil 36 des Halters 12 angeordnet. Anlagefläche 54 und Begrenzungsfläche 56 werden durch den zweiten Trennschlitz voneinander getrennt. Die Anlagefläche 54 dient der Anlage der konischen Umfangsfläche 58, welche am Schraubenkopf 46 der Schraube 44 vorgesehen ist (siehe Fig. 9). Fig. 10 zeigt den in Fig. 5 angedeuteten Querschnitt, in der auch die erste Ausnehmung 52 zu sehen ist. Die am Oberteil 34 des Halters 12 angeordnete Anlagefläche 54 ist vorzugsweise unter einem Winkel α₁ zur Gewindeachse 60 des Gewindes 48 geneigt (siehe Fig. 10). Dieser Winkel α₁ ist vorzugsweise gleich groß wie ein zweiter Winkel α₂, welchen die konisch geformte Umfangsfläche 58 des Schraubenkopfs 46 mit der Schraubenachse 62 der Schraube 44 einschließt (siehe Fig. 9). Grundsätzlich wäre es auch möglich, dass der zweite Winkel α₂ größer ist als der erste Winkel α₁. Besonders bevorzugt ist es jedoch, dass die beiden Winkel α und α₂ gleich groß sind.

Wie aus Fig. 10 des Weiteren ersichtlich ist, ist der Abstand zwischen der Anlagefläche 54 und der Gewindeachse 60 kleiner als der Abstand zwischen der Gewindeachse 60 und der unteren Begrenzungsfläche 56. Der zuletzt genannte Abstand zwischen der Gewindeachse 60 und der unteren Begrenzungsfläche 56 ist auch größer als der halbe Durchmesser des Schraubenkopfs 46 der Schraube 44. Hierdurch ist gewährleistet, dass die Schraube 44 beim Einschrauben in den Halter 12 lediglich die am Oberteil 34 des Halters 12 angeordnete Anlagefläche 54 kontaktiert bzw. an diese angreift, wohingegen die am Unterteil 36 des Halters 12 vorgesehene untere Begrenzungsfläche 56 dabei freiläuft.

Wenngleich es, wie oben erwähnt, bevorzugt ist, die Schraube 44 von der ersten Längsseite 50 des Halters 12 aus in diesen einzuschrauben, ist es bei dem hier gezeigten Ausführungsbeispiel des erfindungsgemäßen Werkzeugs 10 auch möglich, die Schraube 44 von der gegenüberliegenden zweiten Längsseite 64 des Halters 12 aus in diesen einzuschrauben. Bei dem vorliegend gezeigten Ausführungsbeispiel ist nämlich auch auf der zweiten Längsseite 64 des Halters 12 eine Ausnehmung 66 zur Aufnahme des Schraubenkopfs 46 der Schraube 44 vorgesehen (siehe Fig. 2, 5 und 10). Diese Ausnehmung 66 ist äquivalent zu der ersten Ausnehmung 52 geformt und weist äquivalent zur ersten Ausnehmung 52 ebenfalls eine Anlagefläche 54' sowie eine untere Begrenzungsfläche 56' auf (siehe Fig. 5 und 10). Die Ausnehmung 66 wird vorliegend als zweite Ausnehmung 66 bezeichnet. Somit ist es möglich, dass die Schrauben 44 je nach Einbausituation und Platzverhältnis sowohl von der ersten Längsseite 50 aus in die erste Ausnehmung 52 eingesetzt wird als auch von der zweiten Längsseite 64 aus in die zweite Ausnehmung 66 eingesetzt wird und anschließend mit dem Gewinde 48 verschraubt wird.

Der erfindungsgemäße Halter 12 weist des Weiteren einen internen Kühlmittelkanal 68 auf. Über diesen Kühlmittelkanal 68 lässt sich Kühlmittel durch den Halter 12 hindurch bis in den Bereich des Schneideinsatzes 14 leiten. Der Kühlmittelkanal 68 weist mehrere Teilstücke auf, welche in den Fig. 6, 7 und 8 ersichtlich sind. Der Kühlmittelkanal 68 mündet letztendlich in einen Kühlmittelausgang 70, welcher in der oberen Klemmbacke 24 angeordnet ist. Das Kühlmittel kann entweder seitlich oder vom hinteren Ende 26 aus in das im Schaft 28 vorgesehene erste Teilstück 72 eingeführt werden. Von dort aus fließt das Kühlmittel in das zweite Teilstück 74. Dieses zweite Teilstück 74 verbindet das erste Teilstück 72 mit einem dritten Teilstück 76, welches in der oberen Klemmbacke 24 angeordnet ist. Das zweite Teilstück 74 verläuft durch das Innere des Stegs 42 hindurch vom Unterteil 36 in das Oberteil 34 des Halters.

Aus Fig. 6 ist ferner ersichtlich, dass der zweite Trennschlitz 40 im Wesentlichen V-förmig ausgestaltet ist und zwei Abschnitte, einen ersten Abschnitt 78 sowie einen zweiten Abschnitt 80 aufweist. Die beiden Abschnitte 78, 80 des zweiten Trennschlitzes 40 schließen untereinander einen spitzen Winkel ein. Der erste Abschnitt 78 erstreckt sich zwischen dem Steg 42 und dem zweiten Abschnitt 80. Der zweite Abschnitt 80 erstreckt sich zwischen dem ersten Abschnitt 78 und einem freien Ende 82 des zweiten Trennschlitzes 40. Durch diese V-Form des zweiten Trennschlitzes 40 wird ein Überdrehen des Oberteils 34 beim Einschrauben der Spannschraube 44 verhindert, da das Oberteil 34 im Bereich des zweiten Abschnitts 80 an den Schaft 28 anstößt, wenn der erste Abschnitt 78 zu weit aufgespreizt wird bzw. das Oberteil 34 zu stark verkippt wird.

## Patentansprüche

1. Halter (12) für ein Werkzeug (10) zur spanenden Bearbeitung eines Werkstücks, wobei der Halter (12) im Bereich seines vorderen Endes (18) eine Schneideinsatzaufnahme (20) zur Aufnahme eines Schneideinsatzes (14) und im Bereich seines gegenüberliegenden hinteren Endes (26) einen Schaft (28) aufweist, welcher sich im Wesentlichen entlang einer Längsachse (32) erstreckt und einen Einspannabschnitt (30) zum Einspannen des Halters (12) in einer Werkzeugmaschine bildet, wobei die Schneideinsatzaufnahme (20) durch eine obere und eine untere Klemmbacke (24, 22) definiert ist, wobei der Halter (12) ein Oberteil (34) aufweist, an dem die obere Klemmbacke (24) angeordnet ist, und ein Unterteil (36) aufweist, an dem die untere Klemmbacke (22) angeordnet ist, wobei der Schaft (28) integral mit dem Unterteil (36) verbunden ist und das Ober- und das Unterteil (34, 36) ausschließlich über einen Steg (42) miteinander verbunden sind, welcher sich zwischen einem ersten und einem zweiten Trennschlitz (38, 40) erstreckt, wobei sich die beiden Trennschlitze (38, 40) zwischen dem Oberteil (34) und dem Unterteil (36) des Halters (12) erstrecken und auf gegenüberliegenden Seiten des Steges (42) angeordnet sind, so dass das Oberteil (34) über den Steg (42) in der Art einer Wippe relativ zu dem Unterteil (36) schwenkbeweglich ist, wobei sich der erste Trennschlitz (38) in einem vorderen Halterbereich zwischen der Schneideinsatzaufnahme (20) und dem Steg (42) erstreckt, und wobei sich der zweite Trennschlitz (40) in einem mittleren Halterbereich zwischen dem Steg (42) und dem Einspannabschnitt (30) erstreckt, wobei der Halter (12) ferner ein Betätigungsmittel (44) aufweist, welches im mittleren Halterbereich an dem Oberteil (34) angreift und dazu ausgebildet ist, den zweiten Trennschlitz (40) aufzuspreizen, um die obere Klemmbacke (22) auf die untere Klemmbacke zuzubewegen und den Schneideinsatz (14) zwischen der oberen und der unteren Klemmbacke (24, 22) festzuklemmen,
**dadurch gekennzeichnet, dass** das Betätigungsmittel (44) eine Schraube ist, die in ein im Unterteil (36) vorgesehenes Gewinde (48) eingreift, welches sich entlang einer Gewindeachse (60) erstreckt, die im Wesentlichen senkrecht zu der Längsachse (32) des Halters (12) ausgerichtet ist, wobei die Schraube einen konischen Schraubenkopf (46) aufweist, welcher zum Aufspreizen des zweiten Trennschlitzes (40) an dem Oberteil (34) angreift.

2. Halter gemäß Anspruch 1, wobei der Halter (12) auf einer ersten Längsseite (50) eine erste Ausnehmung (52) zur Aufnahme des Schraubenkopfs (46) aufweist, wobei das Gewinde (48) und der zweite Trennschlitz (40) in die erste Ausnehmung (52) münden, wobei die erste Ausnehmung (52) zumindest teilweise von einer Anlagefläche (54) begrenzt wird, welche an dem Oberteil (34) angeordnet ist und an der der Schraubenkopf (46) angreift.

3. Halter gemäß Anspruch 2, wobei die Anlagefläche (54) konisch geformt ist.

4. Halter gemäß Anspruch 3, wobei die Anlagefläche (54) mit der Gewindeachse (60) einen ersten Winkel (α1) einschließt und wobei der konische Schraubenkopf (46) eine konische Umfangsfläche (58) aufweist, welche mit einer Längsachse (62) der Schraube einen zweiten Winkel (α₂) einschließt, welcher größer oder gleich groß ist wie der erste Winkel (α₁).

5. Halter gemäß einem der Ansprüche 2 bis 4, wobei die erste Ausnehmung (52) zumindest teilweise von einer unteren Begrenzungsfläche (56) begrenzt wird, welche an dem Unterteil (36) angeordnet ist, wobei ein erster Abstand zwischen der Gewindeachse (60) und der Anlagefläche (54) kleiner ist als ein zweiter Abstand zwischen der Gewindeachse (60) und der unteren Begrenzungsfläche (56), und wobei ein halber Durchmesser des Schraubenkopfs (46) kleiner ist als der zweite Abstand.

6. Halter gemäß einem der Ansprüche 2 bis 5, wobei die obere Klemmbacke (24) und die untere Klemmbacke (22) an eine zweite Längsseite (64) des Halters (12) angrenzen, welche der ersten Längsseite (50) gegenüberliegt.

7. Halter gemäß Anspruch 6, wobei der Halter (12) auf der zweiten Längsseite (64) eine zweite Ausnehmung (66) zur Aufnahme des Schraubenkopfs (46) aufweist, wobei das Gewinde (48) und der zweite Trennschlitz (40) in die zweite Ausnehmung (66) münden, so dass die Schraube wahlweise sowohl von der ersten Längsseite (50) bzw. der ersten Ausnehmung aus als auch von der zweiten Längsseite bzw. der zweiten Ausnehmung aus in das Gewinde einsetzbar ist.

8. Halter gemäß einem der Ansprüche 1 bis 7, wobei der zweiten Trennschlitz (40) einen ersten Abschnitt (78) aufweist, welcher an den Steg (42) angrenzt, und einen zweiten Abschnitt (80) aufweist, welcher an ein freies Ende (82) des zweiten Trennschlitzes (40) angrenzt, wobei der erste und der zweite Abschnitt (78, 80) unter einem spitzen Winkel relativ zueinander geneigt sind.

9. Halter gemäß einem der Ansprüche 1 bis 8, wobei der erste Trennschlitz (38) in die Schneideinsatzaufnahme (20) mündet.

10. Halter gemäß einem der Ansprüche 1 bis 9, wobei beide Trennschlitze (38, 40) den Halter (12) über die gesamte Breite des Halters (12) durchtrennen, und wobei der erste Trennschlitz (38) kürzer als der zweite Trennschlitz (40) ist.

11. Halter gemäß einem der Ansprüche 1 bis 10, wobei der Halter (12) einen internen Kühlmittelkanal (68) aufweist, wobei ein Kühlmittelausgang (70) des Kühlmittelkanals (68) an der oberen Klemmbacke (24) angeordnet ist, und wobei ein Teilstück (74) des Kühlmittelkanals (68) im Inneren des Steges (42) von dem Unterteil (36) in das Oberteil (34) des Halters (12) führt.

12. Werkzeug (10) zur spanenden Bearbeitung eines Werkstücks, mit einem Schneideinsatz (14) und einem Halter (12) gemäß einem der Ansprüche 1 bis 11.

## Claims

1. A holder (12) for a tool (10) for machining a workpiece, wherein the holder (12)comprises in a region of its front end (18) a cutting insert receptacle (20) for receiving a cutting insert (14) and in a region of its opposite rear end (26) a shank (28) which extends substantially along a longitudinal axis (32) and forms a clamping portion (30) for clamping the holder (12) in a machine tool, wherein the cutting insert receptacle (20) is defined by an upper and a lower clamping jaw (24, 22), wherein the holder (12) comprises an upper part (34) on which the upper clamping jaw (24) is arranged and comprises a lower part (36) on which the lower clamping jaw (22) is arranged, wherein the shank (28) is connected integrally to the lower part (36) and the upper and the lower parts (34, 36) are connected together exclusively by means of a web (42) which extends between a first and a second separating slit (38, 40), wherein the two separating slits (38, 40) extend between the upper part (34) and the lower part (36) of the holder (12) and are arranged on opposite sides of the web (42) such that the upper part (34) is pivotable relative to the lower part (36) via the web (42) in the manner of a rocker, wherein the first separating slit (38) extends in a front holder region between the cutting insert receptacle (20) and the web (42), and wherein the second separating slit (40) extends in a central holder region between the web (42) and the clamping portion (30), wherein the holder (12) further comprises an actuating means (44) which cooperates with the upper part (34) in the central holder region and is configured to spread the second separating slit (40) in order to move the upper clamping jaw (22) toward the lower clamping jaw and to clamp the cutting insert (14) between the upper and the lower clamping jaws (24, 22),
**characterized in that** the actuating means (44) is a screw which engages in a thread (48) which is provided in the lower part (36) and extends along a thread axis (60) which is aligned substantially perpendicularly to the longitudinal axis (32) of the holder (12), wherein the screw comprises a conical screw head (46) which cooperates with the upper part (34) for spreading the second separating slit (40).

2. The holder as claimed in claim 1, wherein the holder (12) comprises a first recess (52) on a first longitudinal side (50) for receiving the screw head (46), wherein the thread (48) and the second separating slit (40) open out into the first recess (52), wherein the first recess (52) is delimited at least in part by a contact surface (54) which is arranged on the upper part (34) and with which the screw head (46) cooperates.

3. The holder as claimed in claim 2, wherein the contact surface (54) is shaped conically.

4. The holder as claimed in claim 3, wherein the contact surface (54) encloses a first angle (α₁) with the thread axis (60) and wherein the conical screw head (46) comprises a conical circumferential surface (58) which encloses a second angle (α₂), which is greater than or equal to the first angle (α₁), with a longitudinal axis (62) of the screw.

5. The holder as claimed in one of claims 2 to 4, wherein the first recess (52) is delimited at least in part by a lower delimiting surface (56) which is arranged on the lower part (36), wherein a first distance between the thread axis (60) and the contact surface (54) is smaller than a second distance between the thread axis (60) and the lower delimiting surface (56), and wherein half a diameter of the screw head (46) is smaller than the second distance.

6. The holder as claimed in one of claims 2 to 5, wherein the upper clamping jaw (24) and the lower clamping jaw (22) adjoin a second longitudinal side (64) of the holder (12) which is arranged opposite the first longitudinal side (50).

7. The holder as claimed in claim 6, wherein the holder (12) comprises a second recess (66) on the second longitudinal side (64) for receiving the screw head (46), wherein the thread (48) and the second separating slit (40) open out into the second recess (66) such that the screw is insertable into the thread as an option both from the first longitudinal side (50) or the first recess and from the second longitudinal side or the second recess.

8. The holder as claimed in one of claims 1 to 7, wherein the second separating slit (40) comprises a first portion (78) which adjoins the web (42) and a second portion (80) which adjoins a free end (82) of the second separating slit (40), wherein the first and the second portions (78, 80) are inclined relative to one another at an acute angle.

9. The holder as claimed in one of claims 1 to 8, wherein the first separating slit (38) opens out into the cutting insert receptacle (20).

10. The holder as claimed in one of claims 1 to 9, wherein both separating slits (38, 40) cut through the holder (12) over the entire width of the holder (12), and wherein the first separating slit (38) is shorter than the second separating slit (40).

11. The holder as claimed in one of claims 1 to 10, wherein the holder (12) comprises an internal coolant channel (68), wherein a coolant output (70) of the coolant channel (68) is arranged on the upper clamping jaw (24), and wherein a section (74) of the coolant channel (68) leads from the lower part (36) into the upper part (34) of the holder (12) in an interior of the web (42).

12. A tool (10) for machining a workpiece, having a cutting insert (14) and a holder (12) according to one of claims 1 to 11.

## Revendications

1. Support (12) pour un outil (10) d'usinage par enlèvement de copeaux d'une pièce, le support (12) présentant, dans la région de son extrémité avant (18), un logement d'insert de coupe (20) servant au logement d'un insert de coupe (14) et, dans la région de son extrémité arrière (26) opposée, une tige (28), laquelle s'étend sensiblement le long d'un axe longitudinal (32) et forme une portion de serrage (30) servant au serrage du support (12) dans une machine-outil, le logement d'insert de coupe (20) étant défini par une mâchoire de serrage supérieure et une mâchoire de serrage inférieure (24, 22), le support (12) présentant une partie supérieure (34), sur laquelle la mâchoire de serrage supérieure (24) est disposée, et une partie inférieure (36), sur laquelle la mâchoire de serrage inférieure (22) est disposée, la tige (28) étant reliée d'un seul tenant à la partie inférieure (36) et la partie supérieure et la partie inférieure (34, 36) étant reliées l'une à l'autre exclusivement par le biais d'un élément jointif (42), lequel s'étend entre une première et une deuxième fente de séparation (38, 40), les deux fentes de séparation (38, 40) s'étendant entre la partie supérieure (34) et la partie inférieure (36) du support (12) et étant disposées sur des côtés opposés de l'élément jointif (42), de sorte que la partie supérieure (34) est mobile en pivotement par rapport à la partie inférieure (36) à la manière d'une bascule par le biais de l'élément jointif (42), la première fente de séparation (38) s'étendant dans une région de retenue avant entre le logement d'insert de coupe (20) et l'élément jointif (42), et la deuxième fente de séparation (40) s'étendant dans une région de retenue centrale entre l'élément jointif (42) et la portion de serrage (30), le support (12) présentant en outre un moyen d'actionnement (44), lequel agit sur la partie supérieure (34) dans la région de retenue centrale et est réalisé pour écarter la deuxième fente de séparation (40), afin de déplacer la mâchoire de serrage supérieure (22) vers la mâchoire de serrage inférieure et de serrer fixement l'insert de coupe (14) entre la mâchoire de serrage supérieure et la mâchoire de serrage inférieure (24, 22),
**caractérisé en ce que** le moyen d'actionnement (44) est une vis qui vient en prise dans un filetage (48) prévu dans la partie inférieure (36), lequel s'étend le long d'un axe de filetage (60) qui est orienté sensiblement perpendiculairement à l'axe longitudinal (32) du support (12), la vis présentant une tête de vis conique (46), laquelle agit sur la partie supérieure (34) pour l'écartement de la deuxième fente de séparation (40).

2. Support selon la revendication 1, le support (12) présentant, sur un premier côté longitudinal (50), un premier évidement (52) servant au logement de la tête de vis (46), le filetage (48) et la deuxième fente de séparation (40) débouchant dans le premier évidement (52), le premier évidement (52) étant délimité au moins partiellement par une surface d'appui (54) qui est disposée sur la partie supérieure (34) et sur laquelle la tête de vis (46) agit.

3. Support selon la revendication 2, la surface d'appui (54) étant de forme conique.

4. Support selon la revendication 3, la surface d'appui (54) formant avec l'axe de filetage (60) un premier angle (α1) et la tête de vis conique (46) présentant une surface périphérique conique (58), laquelle forme avec un axe longitudinal (62) de la vis un deuxième angle (α₂), lequel est supérieur ou égal au premier angle (α₁).

5. Support selon l'une des revendications 2 à 4, le premier évidement (52) étant délimité au moins partiellement par une surface de limitation inférieure (56), laquelle est disposée sur la partie inférieure (36), une première distance entre l'axe de filetage (60) et la surface d'appui (54) étant inférieure à une deuxième distance entre l'axe de filetage (60) et la surface de limitation inférieure (56), et un demi-diamètre de la tête de vis (46) étant inférieur à la deuxième distance.

6. Support selon l'une des revendications 2 à 5, la mâchoire de serrage supérieure (24) et la mâchoire de serrage inférieure (22) étant adjacentes à un deuxième côté longitudinal (64) du support (12), lequel deuxième côté longitudinal est opposé au premier côté longitudinal (50).

7. Support selon la revendication 6, le support (12) présentant, sur le deuxième côté longitudinal (64), un deuxième évidement (66) servant au logement de la tête de vis (46), le filetage (48) et la deuxième fente de séparation (40) débouchant dans le deuxième évidement (66), de sorte que la vis puisse être insérée dans le filetage sélectivement à partir du premier côté longitudinal (50) ou du premier évidement tout comme à partir du deuxième côté longitudinal ou du deuxième évidement.

8. Support selon l'une des revendications 1 à 7, la deuxième fente de séparation (40) présentant une première portion (78), laquelle est adjacente à l'élément jointif (42), et présentant une deuxième portion (80), laquelle est adjacente à une extrémité libre (82) de la deuxième fente de séparation (40), la première et la deuxième portion (78, 80) étant inclinées l'une par rapport à l'autre suivant un angle aigu.

9. Support selon l'une des revendications 1 à 8, la première fente de séparation (38) débouchant dans le logement d'insert de coupe (20).

10. Support selon l'une des revendications 1 à 9, les deux fentes de séparation (38, 40) divisant le support (12) sur toute la largeur du support (12), et la première fente de séparation (38) étant plus courte que la deuxième fente de séparation (40).

11. Support selon l'une des revendications 1 à 10, le support (12) présentant un canal interne de réfrigérant (68), une sortie de réfrigérant (70) du canal de réfrigérant (68) étant disposée au niveau de la mâchoire de serrage supérieure (24), et un tronçon (74) du canal de réfrigérant (68) menant à partir de la partie inférieure (36) dans la partie supérieure (34) du support (12) à l'intérieur de l'élément jointif (42).

12. Outil (10) d'usinage par enlèvement de copeaux d'une pièce, comportant un insert de coupe (14) et un support (12) selon l'une des revendications 1 à 11.
